# EUROPEAN PATENT SPECIFICATION

(11) **EP 2 144 256 B1**
(45) Date of publication and mention of the grant of the patent: **16.03.2011**
(21) Application number: 08012349.0
(22) Date of filing: 09.07.2008
(51) Int. Cl.: H01C 7/112

(54) **Current/voltage nonlinear resistor**
Nicht linearer Strom-/Spannungswiderstand
Résistance non linéaire de courant/tension

(43) Date of publication of application: 13.01.2010
(73) Proprietor: KABUSHIKI KAISHA TOSHIBA, Tokyo 105-8001 (JP)
(72) Inventor: Kasuga, Yasunori, Tokyo 105-8001 (JP); Ando Hideyasu, Tokyo 105-8001 (JP); Imai, Toshiya, Tokyo 105-8001 (JP)
(74) Representative: HOFFMANN EITLE

(56) References cited:
- EP-A- 0 961 300
- JP-A- 4 257 201
- JP-A- 61 059 704
- JP-A- 2003 007 512
- JP-A- 2007 329 174

## Description

### BACKGROUND OF THE INVENTION

### 1. Field of the Invention

The present invention relates to a current/voltage nonlinear resistor whose main component is zinc oxide (ZnO), applied in an overvoltage protection device, and more particularly relates to a current/voltage nonlinear resistor with excellent thermal stability at high temperatures.

### 2. Description of the Related Art

Overvoltage protection devices such as lightning arrestors or surge absorbers are generally used in power systems and electronic device circuitry to protect the components from abnormal voltage. Current/voltage nonlinear resistors are provided to such overvoltage protection devices. A current/voltage nonlinear resistor has nonlinear resistance characteristics such that it exhibits a substantially insulating property at ordinary voltage levels, but exhibits low resistance when an abnormal voltage is applied. This is effective in terms of suppressing overvoltage.

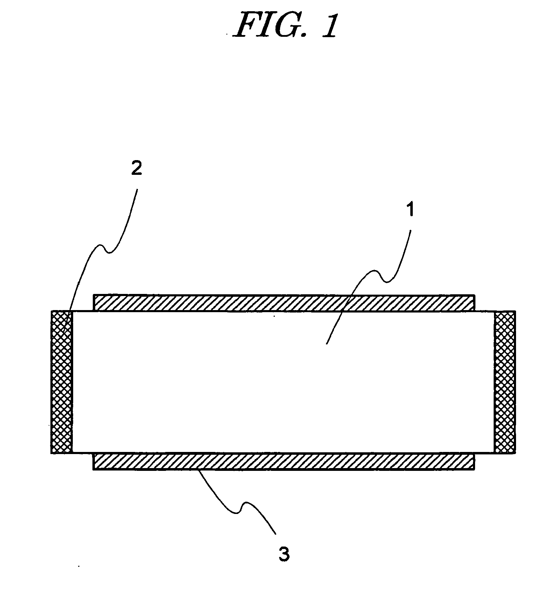

The configuration of a current/voltage nonlinear resistor will be described through reference to Fig. 1. The current/voltage nonlinear resistor is composed of a sintered body 1, and side-face high-resistance layers 2 are formed on the side faces of this sintered body 1. Electrodes 3 are provided to the two flat faces of the sintered body 1. The specific steps for manufacturing a current/voltage nonlinear resistor will now be discussed.

A current/voltage nonlinear resistor may be produced according to the procedure discussed in Japanese Examined Patent Application Publication H4-25681. First of all, a raw material is prepared by adding specific amounts of Bi₂O₃, Sb₂O₃, Co₂O₃, MnO, and NiO as sub-components to zinc oxide (ZnO), which is used as the main component. This raw material is then thoroughly mixed with water and a binder, and then granulated with a spray drier or the like and molded.

Then, the sintered body 1 is obtained by heat treating the molded body in air at 400 to 500°C to remove the added binder, and then firing at 1200°C. After this, the side surfaces of the sintered body are coated with an insulating substance to prevent surface flashover, and these coatings are heat treated to form the side-face high-resistance layers 2. After the formation of the side-face high-resistance layers 2, the end faces of the sintered body 1 are polished, and the electrodes 3 are attached to the polished faces, thereby completing the manufacture of a current/voltage nonlinear resistor.

However, in recent years there has been a growing need for lower power transmission costs, which makes it very important to reduce the size of power transmission and transformation equipment in order to lower power transmission costs. Accordingly, reducing the size of overvoltage protection devices, which determine the insulation level of power transformation equipment, has become a pressing need. The current/voltage nonlinear resistors employed in overvoltage protection devices are themselves the protection level of the overvoltage protection devices, and this makes them an extremely important technological element that affects downsizing of an overvoltage protection device, and in turn downsizing of power transmission and transformation equipment. There have thus been proposed a variety of current/voltage nonlinear resistors improved by, for example, limiting the constituent components.

More specifically, Japanese Patent Application Laid-Open No. 2002-217006 involves a technique for raising the resistance of a nonlinear resistor by limiting the constituent components of a nonlinear resistor, and limiting the proportion of the sintered body accounted for by spinel particles. With the nonlinear resistor discussed in Japanese Patent Application Laid-Open No. 2001-307909, higher resistance is achieved by limiting the constituent components, and limiting the proportion of the sintered body accounted for by a bismuth crystal phase. These techniques result in higher resistance of the nonlinear resistor, which reduces the number of resistors that must be used in an overvoltage protection device, so the overvoltage protection device can be downsized.

A technique has also been proposed with which a joined unit of nonlinear resistors is formed, which allows the lightning arrestor or other such overvoltage protection device to be downsized without lowering its discharge withstand current rating (Japanese Patent Application Laid-Open No. 2001-28303, for example). With this technique, the formation components are further limited to reduce porosity, which yields a sintered body with improved element strength of the nonlinear resistors. If the element strength is higher, discharge withstand current rating is better, so the nonlinear resistor itself can be downsized. Japanese Patent Application Laid-Open No. 2001-93705 is an example of a technique for acquiring superior discharge withstand current rating. With this technique, the constituent components of the nonlinear resistor are limited to lower the resistance of the nonlinear resistor, which improves the discharge withstand current rating thereof and allows the nonlinear resistor to be downsized.

However, the following problems have been indicated with the prior art discussed above. Namely, when the resistance of a current/voltage nonlinear resistor is raised as in Japanese Examined Patent Application Publication H4-25681 and Japanese Patent Application Laid-Open No. 2002-217006, or when an attempt is made to raise the discharge withstand current rating of a current/voltage nonlinear resistor as in Japanese Patent Application Laid-Open Nos. 2001-307909 and 2001-28303, in order to reduce the size of a lightning arrestor or other such overvoltage protection device, it becomes necessary to deal with the high surge energy. As a result, joule heating after the absorption of surge energy causes the heating temperature of a current/voltage nonlinear resistor to be high. Since the resistance of a current/voltage nonlinear resistor decreases as its temperature rises, if the resistance decreases to a large enough extent, then even though the surge energy has been dealt with, there is a possibility that leakage current will increase and commercial frequency current after the absorption of surge energy will cause a thermal runaway, which shortens the service life of the device.

Therefore, the size of the current/voltage nonlinear resistor itself has to be limited to deter the occurrence of thermal runaway after the absorption of surge energy. Also, if the resistance of an individual current/voltage nonlinear resistor is inadequate, then numerous current/voltage nonlinear resistors have to be laminated in the lightning arrestor or other overvoltage protection device, and this ends up making the overvoltage protection device larger.

JP 2007-329174 A concerns a resistor configured of a sintered body principally containing zinc oxide (ZnO) and containing as sub-components bismuth (Bi), cobalt (Co), manganese (Mn), antimony (Sb) and nickel (Ni) in an amount of (based on their oxides) 0.3-1.0 mol% Bi₂O₃, 0.3-1.5 mol% Co₂O₃, 0.1-2 mol% MnO, 0.5-2.5 mol% Sb₂O₃ and 0.5-3 mol% NiO respectively, and having a relation of relative ratios of bismuth to antimony and of manganese to cobalt (based on their oxides) represented by 0.15 < Bi₂O_{3/}Sb₂O₃ < 1.0 and 0.3 < MnO/CO₂O₃ < 3.5.

JP 2003-007512 A concerns a process for producing a nonlinear resistor element having improved service life, a high varistor voltage and a small clamping voltage ratio. In the process Bismuth oxide Bi₂O₃ of 0.25 to 1. 50 mol. % and antimony oxide Sb₂O₃ of 0.25 to 1.50 mol.% are added to zinc oxide ZnO as a main component. The compounding ratio of bismuth oxide to antimony oxide is so set as to satisfy a formula, 0.25 <= Sb₂O_{3/}Bi₂O₃ <= 1.50. Cobalt oxide Co₂O₃ of 0.25 to 1.50 mol.%, manganese oxide MnO of 0.05 to 0.50 mol.%, nickel oxide NiO of 0.05 to 0.50 mol.%, and aluminum oxide Al₂O₃ of 0.001 to 0.01 mol. % are added and the mixed material is sintered at a sintering temperature of 870 to 1050°C.

EP-A-0 961 300 concerns a sintered body which can be formed into a resistor having a non-linear resistance and which includes zinc oxide as the principal component and bismuth, cobalt, antimony, manganese and nickel respectively expressed as Bi₂O₃, Co₂O₃, Sb₂O₃, MnO and NiO as auxiliary components. The composition contains 0.05 to 10 mol% of Bi₂O₃, 0.05 to 10 mol% of Co₂O₃, 0.05 to 10 mol% of Sb₂O₃, 0.05 to 10 mol% of MnO and 0.05 to 10 mol% of NiO. The content ratio of the Bi₂O₃ to the NiO is in a mole ratio from 0.5 to 1.5 and the content ratio of the MnO to the Sb₂O₃ is in a mole ratio of 1.0 or less.

### SUMMARY OF THE INVENTION

The present invention was proposed in order to solve the problems encountered in the past described above, and it is an object thereof to provide a current/voltage nonlinear resistor that is more downsized, excellent in current/voltage nonlinear characteristics, service life, and surge energy resistance, reduces the rate of a decrease in resistance when the temperature of the current/voltage nonlinear resistor rises, or in other words, has better thermal stability at high temperatures, and therefore contributes to downsizing of an overvoltage protection device.

To achieve the object described above, the present invention defines the types and amounts of the constituent components of a sintered body. Specifically, the present invention provides a current/voltage nonlinear resistor composed of a sintered body in which zinc oxide (ZnO) is the main component and bismuth (Bi), antimony (Sb), cobalt (Co), manganese (Mn), and nickel (Ni) are sub-components, wherein the sub-components, respectively calculated as Bi₂O₃ , Sb₂O₃, Co₂O₃, MnO, and NiO, are contained in the proportions of: 0.3 to 1 mol% Bi₂O₃, 0.5 to 2.5 mol% Sb₂O₃, 0.3 to 1.5 mol% Co₂O₃, 0.2 to 2 mol% MnO, 0.5 to 3 mol% NiO; the ratio of the NiO content to the MnO content being from 2.0 to 6.0; and the ratio of the Sb₂O₃ content to the MnO content being from 1.5 to 4.0, and wherein the sintered body contains iron (Fe) as another sub-component, calculated as Fe₂O₃, in the proportion of 0.1 to 1000 ppm Fe₂O₃.

With the present invention as discussed above, the Bi₂O₃ is a component that is present at the grain boundary of the ZnO main component and causes nonlinear resistance characteristics to manifest themselves. The Sb₂O₃ is a component that has the action of forming spinel particles with ZnO and suppressing and making uniform the growth of the ZnO particles during sintering, and has the effect of enhancing the nonlinear resistance characteristics. The Co₂O₃, MnO, and NiO are mainly in the form of a solid solution in spinel particles, and are effective components for greatly improving the nonlinear resistance characteristics. With the current/voltage nonlinear resistor in accordance with the present invention, the extent to which resistance decreases when the temperature of the current/voltage nonlinear resistor rises can be reduced by defining these sub-components to be within the above ranges, and setting the ratio of the NiO content to the MnO content to be from 2.0 to 6.0, and the ratio of the Sb₂O₃ content to the MnO content to be from 1.5 to 4.0. Excellent nonlinear resistance characteristics can also be ensured.

With the current/voltage nonlinear resistor of the present invention, the ranges of the contents of bismuth, antimony, cobalt, manganese, nickel and iron, which are sub-components of the sintered body, are defined, and the ratio of NiO to MnO and the ratio of Sb₂O₃ to MnO are defined, the result of which is that the nonlinear resistance characteristics, service life, and surge energy resistance are all excellent, and furthermore thermal stability can be increased at high temperatures, and this contributes to making the overvoltage protection device more downsized.

### BRIEF DESCRIPTION OF THE DRAWINGS

Fig. 1 is a cross section of a current/voltage nonlinear resistor.

### DESCRIPTION OF THE PREFERRED EMBODIMENTS

Embodiments in accordance with the present invention will now be described in specific terms through reference to the drawings. As already mentioned, the nonlinear resistor is composed of the sintered body 1, side-face high-resistance layers 2 are formed on the side faces, and electrodes 3 are provided to the two flat faces of the sintered body 1 (see Fig. 1) . All of the embodiments given below relate to the constituent components of the sintered body 1.

### (1) First Reference Embodiment

### [Steps for Manufacturing Current/Voltage Nonlinear Resistor]

First, a sample corresponding to the first reference embodiment and a sample being outside the scope of the present invention (used as a comparative example) were produced by the following procedure.

First, Bi₂O₃, Sb₂O₃, Co₂O₃, MnO, and NiO were weighed out as sub-components in specific amounts with respect to the ZnO used as the main component, so that the contents of the sub-components in the current/voltage nonlinear resistor ultimately obtained would be the values shown in Table 1 below. These raw materials were mixed with water and an organic binder in a mixing device to prepare a uniform slurry. To all of the slurries prepared here was added aluminum (in the proportion of 0.008 mol%) as an aqueous solution of aluminum hydroxide (Al₂O₃). Next, each of the resulting slurries was subjected to spray granulation in a spray dryer, which produced a granulated powder with a particle size of about 100 µm.

The granulated powder thus obtained was put in a metal mold and pressed into a cylinder with a diameter of 48 mm and a thickness of 38 mm, and this molded body was heated to 500°C to remove the organic binder that had been added, after which this product was fired under different atmosphere and temperature conditions so that the voltage under a current of 1 mA (voltage at start of operation; V_{1mA}) would be about 200 V/mm. Then, as shown in FIG. 1, the side faces of the sintered body 1 were coated with an inorganic insulating material, and the coating was heat treated to form the side-face resistance layers 2. The upper and lower end faces of the sintered body provided with these side-face resistance layers were polished, after which the electrodes 3 were produced by flame spraying on the polished faces of the sintered body 1. This produced a current/voltage nonlinear resistor.

### [Performance Evaluation]

The nonlinear resistance characteristics of each of the produced various current/voltage nonlinear resistors were evaluated as follows. The voltage under a current of 1 mA (voltage at start of operation; V_{1mA}) and the voltage at an impulse current of 8 x 20 µs and 10 kA (V_{10kA}) were measured, and the ratio of these (V_{10kA}/V_{1mA}) was evaluated as a nonlinearity coefficient. The smaller is this nonlinearity coefficient, the better are the nonlinear resistance characteristics.

Also, the produced current/voltage nonlinear resistors were each heated to 200°C in a thermostatic tank, and the leakage current of the resistance (IR) was measured and evaluated when AC voltage that was 90% of the voltage at the start of operation (V_{1mA}) was applied. The lower is the value of this resistance leakage current, the better is the thermal stability at high temperatures. As samples of each composition, 10 pieces were measured, and the average value of each 10-piece group was used as nonlinearity coefficient and the resistance leakage current at 200°C for each composition.

For the various current/voltage nonlinear resistors produced by varying the amounts in which the various components were added, Table 1 below shows the amounts in which the various components were contained, the voltage at the start of operation, the nonlinearity coefficient, and the resistance leakage current at 200°C. In Table 1, sample numbers marked with an asterisk indicate comparative examples of samples being outside of the scope of the present invention.

Here, the current/voltage nonlinear resistors corresponding to the first reference embodiment are those having the following constituent components (the samples not marked with an asterisk in Table 1). Specifically, the sintered body 1, whose main component is ZnO, contains bismuth, antimony, cobalt, manganese, and nickel as sub-components in the proportions, respectively calculated as Bi₂O₃, Sb₂O₃, Co₂O₃, MnO, and NiO, of 0.3 to 1 mol% Bi₂O₃, 0.5 to 2.5 mol% Sb₂O₃, 0.3 to 1.5 mol% Co₂O₃, 0.2 to 2 mol% MnO, and 0.5 to 3 mol% NiO, the ratio of the NiO content to the MnO content being from 2.0 to 6.0, and the ratio of the Sb₂O₃ content to the MnO content being from 1.5 to 4.0. Further, the content of ZnO, which is the main component of the sintered body 1, is not less than 95 mol%.

Of the comparative examples marked with an asterisk, the following points are what did not correspond to this reference embodiment. With sample numbers 1, 7, 12, 18, 19, 24, 34, 39, 40, 43, 45, 47, and 49, the ratio of the NiO content to the MnO content was less than 2.0 or more than 6.0. With sample numbers 25, 30, 31, 32, 38, 40 to 47, and 49, the ratio of the Sb₂O₃ content to the MnO content was less than 1.5. With sample numbers 37 to 52, the content of ZnO, which is the main component of the sintered body 1, was less than 95 mol%.

**Table 1**

| Sample number | Amounts of sub-components (mol%) Amounts of sub-components (mol%) | | | | | | NiO/MnO | Sb₂O₃ /MnO | Nonlinearity (V_{10kA}/V_{1mA}) | Leakage current @200°C (mA) |
|---|---|---|---|---|---|---|---|---|---|---|
| | ZnO | Bi₂O₃ | Sb₂O₃ | Co₂O₃ | NiO | MnO | | | | |
| 1* | 97.30 | 0.50 | 0.70 | 0.70 | 0.50 | 0.30 | 1.7 | 2.3 | 1.733 | 3.84 |
| 2 | 96.80 | 0.50 | 0.70 | 0.70 | 1.00 | 0.30 | 3.3 | 2.3 | 1.725 | 2.50 |
| 3 | 96.70 | 0.50 | 0.50 | 1.00 | 1.00 | 0.30 | 3.3 | 1.7 | 1.736 | 2.20 |
| 4 | 96.70 | 0.40 | 0.70 | 1.00 | 1.00 | 0.20 | 5.0 | 3.5 | 1.740 | 2.16 |
| 5 | 96.50 | 0.50 | 0.70 | 0.50 | 1.50 | 0.30 | 5.0 | 2.3 | 1.734 | 2.23 |
| 6 | 96.50 | 0.50 | 0.50 | 1.00 | 1.20 | 0.30 | 4.0 | 1.7 | 1.724 | 2.42 |
| 7* | 96.40 | 0.50 | 0.70 | 0.70 | 1.50 | 0.20 | 7.5 | 3.5 | 1.755 | 3.58 |
| 8 | 96.20 | 0.50 | 0.70 | 0.70 | 1.50 | 0.40 | 3.8 | 1.8 | 1.739 | 2.81 |
| 9 | 96.30 | 0.50 | 0.70 | 0.70 | 1.50 | 0.30 | 5.0 | 2.3 | 1.730 | 2.55 |
| 10 | 96.20 | 0.30 | 0.70 | 1.00 | 1.50 | 0.30 | 5.0 | 2.3 | 1.725 | 1.99 |
| 11 | 96.20 | 0.50 | 0.50 | 1.00 | 1.50 | 0.30 | 5.0 | 1.7 | 1.738 | 2.67 |
| 12* | 96.20 | 0.40 | 0.70 | 1.00 | 1.50 | 0.20 | 7.5 | 3.5 | 1.756 | 3.33 |
| 13 | 96.10 | 0.40 | 0.70 | 1.00 | 1.50 | 0.30 | 5.0 | 2.3 | 1.732 | 2.40 |
| 14 | 96.00 | 0.50 | 1.00 | 1.00 | 1.00 | 0.50 | 2.0 | 2.0 | 1.738 | 2.94 |
| 15 | 96.00 | 0.50 | 0.70 | 1.00 | 1.50 | 0.30 | 5.0 | 2.3 | 1.724 | 1.98 |
| 16 | 96.00 | 0.40 | 0.70 | 1.00 | 1.50 | 0.40 | 3.8 | 1.8 | 1.720 | 2.78 |
| 17 | 95.80 | 0.70 | 0.70 | 1.00 | 1.50 | 0.30 | 5.0 | 2.3 | 1.730 | 2.63 |
| 18* | 95.80 | 0.50 | 1.00 | 1.00 | 1.50 | 0.20 | 7.5 | 5.0 | 1.734 | 3.84 |
| 19* | 95.80 | 0.50 | 0.70 | 0.70 | 2.00 | 0.30 | 6.7 | 2.3 | 1.763 | 3.22 |
| 20 | 95.75 | 0.50 | 1.00 | 1.00 | 1.25 | 0.50 | 2.5 | 2.0 | 1.724 | 2.86 |
| 21 | 95.70 | 1.00 | 0.50 | 1.00 | 1.50 | 0.30 | 5.0 | 1.7 | 1.736 | 2.37 |
| 22 | 95.70 | 0.50 | 1.00 | 1.00 | 1.50 | 0.30 | 5.0 | 3.3 | 1.725 | 2.05 |
| 23 | 95.70 | 0.50 | 1.00 | 0.30 | 2.00 | 0.50 | 4.0 | 2.0 | 1.738 | 2.79 |
| 24* | 95.70 | 0.50 | 0.50 | 1.00 | 2.00 | 0.30 | 6.7 | 1.7 | 1.761 | 3.44 |
| 25* | 95.70 | 0.50 | 0.30 | 1.00 | 2.00 | 0.50 | 4.0 | 0.6 | 1.767 | 3.15 |
| 26 | 95.50 | 1.00 | 0.70 | 1.00 | 1.50 | 0.30 | 5.0 | 2.3 | 1.737 | 2.50 |
| 27 | 95.50 | 0.50 | 1.00 | 1.00 | 1.50 | 0.50 | 3.0 | 2.0 | 1.728 | 2.64 |
| 28 | 95.50 | 0.50 | 1.00 | 0.50 | 2.00 | 0.50 | 4.0 | 2.0 | 1.738 | 2.87 |
| 29 | 95.50 | 0.50 | 0.70 | 1.50 | 1.50 | 0.30 | 5.0 | 2.3 | 1.722 | 2.07 |
| 30* | 95.50 | 0.50 | 0.50 | 1.00 | 2.00 | 0.50 | 4.0 | 1.0 | 1.762 | 2.17 |
| 31* | 95.30 | 0.50 | 1.00 | 0.70 | 2.00 | 0.50 | 4.0 | 2.0 | 1.753 | 3.22 |
| 32* | 95.30 | 0.50 | 0.70 | 1.00 | 2.00 | 0.50 | 4.0 | 1.4 | 1.744 | 3.68 |
| 33 | 95.25 | 0.50 | 1.00 | 1.00 | 1.75 | 0.50 | 3.5 | 2.0 | 1.732 | 2.73 |
| 34* | 95.20 | 0.50 | 1.00 | 1.00 | 2.00 | 0.30 | 6.7 | 3.3 | 1.767 | 2.92 |
| 35 | 95.10 | 0.50 | 1.00 | 1.00 | 2.00 | 0.40 | 5.0 | 2.5 | 1.725 | 2.60 |
| 36 | 95.00 | 0.50 | 1.00 | 1.00 | 2.00 | 0.50 | 4.0 | 2.0 | 1.740 | 2.83 |
| 37* | 94.80 | 0.50 | 1.00 | 1.20 | 2.00 | 0.50 | 4.0 | 2.0 | 1.755 | 3.50 |
| 38* | 94.80 | 0.50 | 1.00 | 1.00 | 2.00 | 0.70 | 2.9 | 1.4 | 1.765 | 3.73 |
| 39* | 94.80 | 0.50 | 0.70 | 0.70 | 3.00 | 0.30 | 10.0 | 2.3 | 1.786 | 5.59 |
| 40* | 94.50 | 0.50 | 1.00 | 1.00 | 1.50 | 1.50 | 1.0 | 0.7 | 1.815 | 6.81 |
| 41* | 94.50 | 0.50 | 1.00 | 1.00 | 2.00 | 1.00 | 2.0 | 1.0 | 1.786 | 6.12 |
| 42* | 94.20 | 0.50 | 0.30 | 1.00 | 3.00 | 1.00 | 3.0 | 0.3 | 1.821 | 7.24 |
| 43* | 94.00 | 0.50 | 1.00 | 1.00 | 1.50 | 2.00 | 0.8 | 0.5 | 1.805 | 7.50 |
| 44* | 94.00 | 0.50 | 0.50 | 1.00 | 3.00 | 1.00 | 3.0 | 0.5 | 1.798 | 5.76 |
| 45* | 94.00 | 0.50 | 1.00 | 1.00 | 2.00 | 1.50 | 1.3 | 0.7 | 1.803 | 7.37 |
| 46* | 93.80 | 0.50 | 0.70 | 1.00 | 3.00 | 1.00 | 3.0 | 0.7 | 1.793 | 5.05 |
| 47* | 93.75 | 0.50 | 1.00 | 1.00 | 2.00 | 1.75 | 1.1 | 0.6 | 1.799 | 8.05 |
| 48* | 93.50 | 1.00 | 1.50 | 1.00 | 2.00 | 1.00 | 2.0 | 1.5 | 1.780 | 6.00 |
| 49* | 93.50 | 0.50 | 1.00 | 1.00 | 2.00 | 2.00 | 1.0 | 0.5 | 1.779 | 6.80 |
| 50* | 93.00 | 0.50 | 1.50 | 1.00 | 3.00 | 1.00 | 3.0 | 1.5 | 1.767 | 4.80 |
| 51* | 92.50 | 0.50 | 2.00 | 1.00 | 3.00 | 1.00 | 3.0 | 2.0 | 1.757 | 4.93 |
| 52* | 92.00 | 0.50 | 2.50 | 1.00 | 3.00 | 1.00 | 3.0 | 2.5 | 1.754 | 5.00 |

### [Action and Effect]

The effect of the first reference embodiment will be described through comparison between the samples corresponding to this reference embodiment and the other samples. Here, as is clear from the results in Table 1, the current/voltage nonlinear resistors in accordance with this reference embodiment exhibited superior nonlinear resistance characteristics (V_{10kA}/V_{1mA}) of not more than 1.74 and thermal stability (current leakage at 200°C) of less than 3.00 mA. In contrast, in the comparative examples (samples outside the scope of the present invention), either the nonlinear resistance characteristics or the thermal stability was excellent, but both of these were not satisfied at the same time.

As is clear from the above, with the first reference embodiment, excellent thermal stability under high temperatures was achieved by applying the sintered body 1 that contains as the main component not less than 95 mol% ZnO, and as the sub-component, 0.3 to 1 mol% Bi₂O₃, 0.5 to 2.5 mol% Sb₂O₃, 0.3 to 1.5 mol% Co₂O₃, 0.2 to 2 mol% MnO, and 0.5 to 3 mol% NiO, and has the ratio of the NiO content to the MnO content be from 2.0 to 6.0, and the ratio of the Sb₂O₃ content to the MnO content be from 1.5 to 4.0.

Therefore, because the current/voltage nonlinear resistor has higher resistance and an improved discharge withstand current rating, even if it becomes necessary to deal with higher surge energy, resulting in that joule heating causes the heating temperature to rise, the extent to which resistance decreases can be controlled at a low level. This means that there is no worry about leakage current increasing, and thermal runaway caused by commercial frequency current after the absorption of surge energy can be prevented, which makes it possible to prevent a decrease in service life characteristics.

Also, since the occurrence of thermal runaway can be detered without limiting the size of the current/voltage nonlinear resistor itself, the current/voltage nonlinear resistor itself can be further downsized, and superior current/voltage nonlinearity characteristics can be obtained. Therefore, a lightning arrestor or other such overvoltage protection device can be downsized while maintaining high reliability, and this in turn allows power transmission and transformation equipment to be downsized, which helps lower the cost of power transmission.

### (2) Second Reference Embodiment

### [Configuration]

Next, a second reference embodiment will be described. In this second reference embodiment, the contents of the sub-components are defined as follows with respect to the ZnO main component. Bismuth, cobalt, and manganese are contained in the proportions, respectively calculated as Bi₂O₃, Co₂O₃, and MnO, of 1.0 mol% each, antimony and nickel are contained in the proportions, respectively calculated as Sb₂O₃ and NiO, of 2 mol% each, and Al₂O₃ is added in the proportion, calculated as Al³⁺, of 0.008 mol%.

Also, in the second reference embodiment, with respect to the above-mentioned basic composition, boron is added so that it will be contained in the proportion of 0.005 to 0.05 wt% calculated as B₂O₃, and current/voltage nonlinear resistors were produced by the method discussed in the first reference embodiment above. Table 2 shows the B₂O₃ content and the percentage change in leakage current. The sample numbers marked with an asterisk in Table 2 are comparative examples that are outside the scope of the present invention.

**Table 2**

| Sample number | Sub-component content | Percentage change in leakage current (IR₃₀₀₀ₕ/IR₀ₕ) |
|---|---|---|
| | B₂O₃ (wt%) | |
| 53* | 0.001 | 2.50 |
| 54 | 0.005 | 0.47 |
| 55 | 0.010 | 0.33 |
| 56 | 0.020 | 0.56 |
| 57 | 0.050 | 0.50 |
| 58* | 0.100 | 1.56 |

### [Performance Evaluation]

The service life characteristics were evaluated as follows for the various current/voltage nonlinear resistors produced as above in the second reference embodiment. Specifically, in evaluating the service life characteristics, the voltage at the start of operation (V_{1mA}) was continuously applied for 3000 hours in the air and at 120°C, and the percentage change in leakage current (IR) before and after the application of V_{1mA} was measured. This change can be expressed by the formula (IR (after 3000 hours))/(the initial IR value (0 hours)), and a value less than one indicates excellent service life characteristics for the current/voltage nonlinear resistor.

### [Action and Effect]

As is clear from Table 2, in the second reference embodiment, when the B₂O₃ content was defined by 0.005 to 0.05 wt%, the change in leakage current had a negative value, and it was found that this allowed the nonlinear resistor itself to be downsized and, at the same time, a current/voltage nonlinear resistor with superior service life characteristics to be obtained. Furthermore, an improvement in service life characteristics by the addition of boron was shown only for the above-mentioned basic composition in this reference embodiment, but it has been confirmed that a similar effect will be obtained as long as the basic composition remains within the ranges set forth in Claims 1 and 2.

### (3) Third Reference Embodiment

### [Configuration]

In a third reference embodiment the contents of the sub-components are defined as follows with respect to the ZnO main component. Bismuth, cobalt, and manganese are contained in the proportions, respectively calculated as Bi₂O₃, Co₂O₃, and MnO, of 1.0 mol% each, antimony and nickel are contained in the proportions, respectively calculated as Sb₂O₃ and NiO, of 2 mol% each, and Al₂O₃ is added in the proportion, calculated as Al³⁺, of 0.008 mol%.

Also, in the third reference embodiment, with respect to the above-mentioned basic composition, silver is added so that it will be contained in the proportion of 0.005 to 0.05 wt% calculated as Ag₂O, and current/voltage nonlinear resistors were produced by the method discussed in the first reference embodiment above. Table 3 shows the Ag₂O content and the percentage change in leakage current. The sample numbers marked with an asterisk in Table 3 are comparative examples that are outside the scope of the present invention.

**Table 3**

| Sample number | Sub-component content | Percentage change in leakage current (IR₃₀₀₀ₕ/IR₀ₕ) |
|---|---|---|
| | Ag₂O (wt%) | |
| 59* | 0.001 | 2.36 |
| 60 | 0.005 | 0.38 |
| 61 | 0.010 | 0.45 |
| 64 | 0.020 | 0.50 |
| 65 | 0.050 | 0.43 |
| 66* | 0.100 | 2.59 |

### [Performance Evaluation]

The service life characteristics were evaluated in the third reference embodiment by the same method as in the second reference embodiment.

### [Action and Effect]

As is clear from Table 3, in the third reference embodiment, when the Ag₂O content was defined by 0.005 to 0.05 wt%, the change in leakage current had a negative value, and just as in the second reference embodiment above, it was found that this allowed the nonlinear resistor itself to be downsized and, at the same time, a current/voltage nonlinear resistor with superior service life characteristics to be obtained. Furthermore, an improvement in service life characteristics by the addition of silver was shown only for the above-mentioned basic composition in this reference embodiment, but it has been confirmed that a similar effect will be obtained as long as the basic composition remains within the ranges set forth in Claims 1 and 2.

### (4) Fourth Reference Embodiment

### [Configuration]

In a fourth reference embodiment the contents of the sub-components are defined as follows with respect to the ZnO main component. Bismuth, cobalt, and manganese are contained in the proportions, respectively calculated as Bi₂O₃, Co₂O₃, and MnO, of 1.0 mol% each, antimony and nickel are contained in the proportions, respectively calculated as Sb₂O₃ and NiO, of 2 mol% each, and boron and silver are added in the proportions, calculated as B₂O₃ and Ag₂O, of 0.02 wt% each.

Further, in the fourth reference embodiment, with respect to the above-mentioned basic composition, Al₂O₃ is added so that it will be contained in the proportion, calculated as Al³⁺, of 0.001 to 0.01 mol%, and current/voltage nonlinear resistors were produced by the method discussed in the first reference embodiment above. Table 4 shows the Al³⁺ content and the nonlinear resistance characteristics. The sample numbers marked with an asterisk in Table 4 are comparative examples that are outside the scope of the present invention.

**Table 4**

| Sample number | Sub-component content | Nonlinearity (V_{10kA}/V_{1mA}) |
|---|---|---|
| | Ag³⁺ (mol%) | |
| 67* | 0.0001 | 1.860 |
| 68* | 0.0005 | 1.825 |
| 69 | 0.0010 | 1.750 |
| 70 | 0.0050 | 1.728 |
| 71 | 0.0100 | 1.732 |
| 72 | 0.0200 | 1.745 |
| 73* | 0.0500 | 1.779 |
| 74* | 0.1000 | 1.834 |

### [Performance Evaluation]

The nonlinear resistance characteristics were evaluated in the fourth reference embodiment by the same method as in the first reference embodiment.

### [Action and Effect]

With the fourth reference embodiment, as shown in Table 4, it was found that as long as the Al³⁺ content was within the range of 0.001 to 0.01 mol%, this allowed the nonlinear resistor itself to be downsized and superior nonlinear resistance characteristics to be obtained. Furthermore, the effect of adding aluminum on service life characteristics was shown only for the above-mentioned basic composition in this reference embodiment, but it has been confirmed that a similar effect will be obtained as long as the basic composition remains within the ranges set forth in Claim 1. Also, it has been confirmed that aluminum will have the same effect with a composition containing ZnO, boron, and silver within the ranges set forth in Claims 2 to 4, in the composition in Claim 1.

### (5) Fifth Reference Embodiment

### [Configuration]

A fifth reference embodiment will be described through reference to Table 5. In this fifth reference embodiment, just as in the third reference embodiment above, the contents of the sub-components are defined as follows with respect to the ZnO main component. Bismuth and cobalt are contained in the proportions, respectively calculated as Bi₂O₃ and Co₂O₃, of 1.0 mol% each, nickel is contained in the proportion, calculated as NiO, of 2 mol%, silver is added in the proportion, calculated as Ag₂O, of 0.02 wt%, and Al₂O₃ is added so that it will be contained in the proportion of 0.008 mol%, calculated as Al³⁺.

Another feature of the fifth reference embodiment is that although current/voltage nonlinear resistors were produced by the method given in the first reference embodiment above, the temperature decreasing rate during firing was limited to be not less than 50°C/hour. Table 5 shows the leakage current at high temperatures in a current/voltage nonlinear resistor produced in a condition in which the temperature decreasing rate during firing is changed within the range of 25 to 100°C/hour. The sample numbers marked with an asterisk in Table 5 are comparative examples that are outside the scope of the present invention.

**Table 5**

| Sample number | Temperature decreasing rate during firing (°C/h) | Leakage current at high temperature (mA) |
|---|---|---|
| 75* | 25 | 7.83 |
| 76 | 50 | 5.30 |
| 77 | 75 | 4.37 |
| 78 | 100 | 4.51 |

### [Performance Evaluation]

In the fifth reference embodiment, the leakage current at high temperatures was evaluated by the same method as that given in the first reference embodiment above. Specifically, the produced current/voltage nonlinear resistors were each heated to 200°C in a thermostatic tank, and the resistance leakage current (IR) was measured and evaluated when AC voltage that was 90% of the voltage at the start of operation (V_{1mA}) was applied.

### [Action and Effect]

As is clear from Table 5, the thermal stability (leakage current at 200°C) was at an excellent level of not more than 5.30 mA with the current/voltage nonlinear resistors in accordance with the fifth reference embodiment, whereas thermal stability was low (7.83 mA) in a comparative example (sample number 75) that is a sample outside the scope of the present invention. Thus, it was found with this fifth reference embodiment that the effect of keeping the temperature decreasing rate during firing to not less than 50°C/hour is that there is less leakage current at high temperatures, and a current/voltage nonlinear resistor with superior thermal stability is obtained.

Specifically, even if joule heating causes the heating temperature to rise, the extent to which resistance decreases can be controlled at a low level, which means that thermal runaway caused by commercial frequency current after the absorption of surge energy can be prevented, and service life characteristics can be enhanced. Also, since there is no need for the current/voltage nonlinear resistor itself to be made larger in order to prevent thermal runaway, the current/ voltage nonlinear resistor itself can be efficiently downsized, while the current/voltage nonlinear characteristics can be enhanced. Furthermore, with this reference embodiment, the effect on thermal stability of the temperature decreasing rate during firing was shown only for the above-mentioned basic composition, but it has been confirmed that the same effect will be obtained with a composition containing ZnO, boron, silver, and aluminum within the ranges set forth in Claims 2 to 5, in the composition in Claim 1.

### (6) Sixth Reference Embodiment and embodiment in accordance with the present invention

### [Configuration]

A sixth reference embodiment (samples 79-90, 100) and an embodiment in accordance with the present invention (samples 91-99) will be described through reference to Table 6. In these embodiments, the contents of the sub-components are defined as follows with respect to the ZnO main component. Bismuth, cobalt, and manganese are contained in the proportions, respectively calculated as Bi₂O₃, Co₂O₃, and MnO, of 1.0 mol% each, antimony and nickel are contained in the proportions, calculated respectively as Sb₂O₃ and NiO, of 2 mol% each, boron and silver are added so that they will be contained in the proportions, calculated respectively as B₂O₃ and Ag₂O, of 0.02 wt% each, and Al₂O₃ is added so that it will be contained in the proportion of 0.008 mol%, calculated as Al³⁺.

Also, in these embodiments, zirconium and iron were added to the above-mentioned basic composition so that they would be contained in the proportions of 0.1 to 1000 ppm, calculated as ZrO₂ and Fe₂O₃, and current/voltage nonlinear resistors were produced by the method given in the first reference embodiment above. Table 6 shows the results of measuring the maximum energy value and the nonlinearity coefficient for the various current/voltage nonlinear resistors. In Table 6, sample numbers marked with an asterisk indicate comparative examples of samples outside of the scope of the present invention.

**Table 6**

| Sample number | Sub-component content (ppm) | | Maximum energy (J/cc) | Nonlinearity (V_{10kA}/V_{1mA}) |
|---|---|---|---|---|
| | Zr | Fe | | |
| 79* | 0.05 | - | 565 | 1.720 |
| 80 | 0.1 | - | 652 | 1.731 |
| 81 | 0.5 | - | 662 | 1.725 |
| 82 | 1 | - | 669 | 1.730 |
| 83 | 5 | - | 687 | 1.710 |
| 84 | 10 | - | 692 | 1.724 |
| 85 | 50 | - | 701 | 1.734 |
| 86 | 100 | - | 702 | 1.725 |
| 87 | 500 | - | 705 | 1.720 |
| 88 | 1000 | - | 712 | 1.740 |
| 89* | 5000 | - | 713 | 1.840 |
| 90* | - | 0.05 | 574 | 1.730 |
| 91 | - | 0.1 | 648 | 1.728 |
| 92 | - | 0.5 | 653 | 1.710 |
| 93 | - | 1 | 668 | 1.720 |
| 94 | - | 5 | 672 | 1.744 |
| 95 | - | 10 | 689 | 1.752 |
| 96 | - | 50 | 710 | 1.739 |
| 97 | - | 100 | 715 | 1.728 |
| 98 | - | 500 | 718 | 1.732 |
| 99 | - | 1000 | 721 | 1.718 |
| 100* | - | 5000 | 730 | 1.870 |

### [Performance Evaluation]

In the sixth reference embodiment (samples 79-90, 100) and the embodiment in accordance with the present invention (samples 91-99), a maximum energy test was conducted for each of the various current/voltage nonlinear resistors produced above. In the maximum energy test, voltage of the commercial frequency (50 Hz) and that was 1.3 times the voltage (V_{1mA}) at an AC current of 1 mA was continuously applied to the current/ voltage nonlinear resistor, and a measurement was made of the energy (J/cc) absorbed up to the point when cracks in the current/voltage nonlinear resistor were detected by an AE detector. In this maximum energy test, 10 pieces of current/voltage nonlinear resistors of each composition were tested, and the average of each 10-piece group was used as the maximum energy value for that composition. Further, the nonlinearity coefficient was measured by the method given in the first reference embodiment above for these current/voltage nonlinear resistors, and the nonlinear resistance characteristics were also evaluated.

### [Action and Effect]

As shown in Table 6, of the comparative examples in the sixth reference embodiment (samples 79-90, 100) and the embodiment in accordance with the present invention (samples 91-99), the maximum energy was low for sample numbers 79 and 90, for which the ZrO₂ or Fe₂O₃ content was less than 0.1 ppm. Also, the nonlinearity coefficient was high for sample numbers 89 and 100, for which the ZrO₂ or Fe₂O₃ content was more than 1000 ppm.

In contrast, with the current/voltage nonlinear resistors in accordance with the sixth reference embodiment (samples 79-90, 100) and the embodiment in accordance with the present invention (samples 91-99), it can be seen that defining the ZrO₂ or Fe₂O₃ content to be within the range of 0.1 to 1000 ppm increases the maximum energy while maintaining the excellent nonlinear resistance characteristics.

Furthermore, the effect of the zirconium or iron content was shown only for the above-mentioned basic composition in these embodiments, but it has been confirmed that a similar effect will be obtained as long as the basic composition remains within the ranges set forth in Claim 1. Also, it has been confirmed that the same effect exists for a composition containing ZnO, boron, silver, and aluminum within the ranges set forth in Claims 2 to 5, in the composition in Claim 1. Furthermore, in these embodiments the effect was shown when either zirconium or iron was contained alone, but it has been confirmed that a similar effect will be obtained when these are added together.

### (7) Other Embodiments

The present invention is not limited to the embodiments given above, and the amounts in which the various constituent components are contained can be varied as needed, and the various embodiments can be combined as needed, as long as the ranges given in the claims are satisfied.

## Claims

1. A current/voltage nonlinear resistor composed of a sintered body in which zinc oxide (ZnO) is the main component and bismuth (Bi), antimony (Sb), cobalt (Co), manganese (Mn), and nickel (Ni) are sub-components,
wherein the sub-components, respectively calculated as Bi₂O₃, Sb₂O₃, Co₂O₃, MnO, and NiO, are contained in the proportions of:
0.3 to 1 mol% Bi₂O₃,
0.5 to 2.5 mol% Sb₂O₃,
0.3 to 1.5 mol% Co₂O₃,
0.2 to 2 mol% MnO,
0.5 to 3 mol% NiO;
the ratio of the NiO content to the MnO content being from 2.0 to 6.0; and
the ratio of the Sb₂O₃ content to the MnO content being from 1.5 to 4.0, **characterized in that**
the sintered body contains iron (Fe) as another sub-component, calculated as Fe₂O₃, in the proportion of 0.1 to 1000 ppm Fe₂O₃.

2. The current/voltage nonlinear resistor according to Claim 1, **characterized in that** the sintered body contains not less than 95 mol% ZnO as the main component.

3. The current/voltage nonlinear resistor according to Claim 1, **characterized in that** the sintered body contains boron (B) as another sub-component, calculated as B₂O₃, in the proportion of 0.005 to 0.05 wt% B₂O₃.

4. The current/voltage nonlinear resistor according to Claim 1, **characterized in that** the sintered body contains silver (Ag) as another sub-component, calculated as Ag₂O, in the proportion of 0.005 to 0.05 wt% Ag₂O.

5. The current/voltage nonlinear resistor according to Claim 1, **characterized in that** the sintered body contains aluminum (Al) as another sub-component, calculated as Al³⁺, in the proportion of 0.001 to 0.01 mol% Al³⁺.

6. The current/voltage nonlinear resistor according to Claim 1, **characterized in that** the sintered body has been produced on the condition that the temperature decreasing rate during firing is limited to be not less than 50°C/hour.

7. The current/voltage nonlinear resistor according to Claim 1, **characterized in that** the sintered body contains zirconium (Zr) as another sub-component, calculated as ZrO₂, in the proportion of 0.1 to 1000 ppm ZrO₂.

## Patentansprüche

1. Strom/Spannungs-nicht-linearer Widerstand bestehend aus einem Sinterkörper, in dem Zinkoxid (ZnO) der Hauptbestandteil ist, und Bismuth (Bi), Antimon (Sb), Kobalt (Co), Mangan (Mn) und Nickel (Ni) Unterbestandteile sind,
wobei die Unterbestandteile, jeweils als Bi₂O₃, Sb₂O₃, CO₂O₃, MnO, und NiO berechnet, in den Verhältnissen:
0,3 bis 1 mol% Bi₂O3,
0,5 bis 2,5 mol% Sb₂O3,
0,3 bis 1,5 mol CO₂O3,
0,2 bis 2 mol% MnO und
0,5 bis 3 mol% NiO
vorhanden sind;
das Verhältnis des NiO-Gehalts zum MnO-Gehalt zwischen 2,0 und 6,0 ist; und
das Verhältnis des Sb₂O₃-Gehalts zum MnO-Gehalt zwischen 1,5 und 4,0 ist,
**dadurch gekennzeichnet, dass** der Sinterkörper Eisen (Fe) als weiteren Unterbestandteil enthält, berechnet als Fe₂O3 im Verhältnis von 0,1 bis 1.000 ppm Fe₂O3.

2. Strom/Spannung-nicht-linearer Widerstand gemäß Anspruch 1, **dadurch gekennzeichnet, dass** der Sinterkörper nicht weniger als 95 mol% ZnO als Hauptkomponente enthält.

3. Strom/Spannungs-nicht-linearer Widerstand gemäß Anspruch 1, **dadurch gekennzeichnet, dass** der Sinterkörper Bor (B) als weiteren Unterbestandteil enthält, berechnet als B₂O3 im Verhältnis von 0,005 bis 0,05 Gew.% B₂O3.

4. Strom/Spannungs-nicht-linearer Widerstand gemäß Anspruch 1, **dadurch gekennzeichnet, dass** der Sinterkörper Silber (Ag) als weiteren Unterbestandteil enthält, berechnet als Ag₂O im Verhältnis von 0,005 bis 0,05 Gew.% Ag₂O.

5. Strom/Spannungs-nicht-linearer Widerstand gemäß Anspruch 1, **dadurch gekennzeichnet, dass** der Sinterkörper Aluminium (A1) als weiteren Unterbestandteil enthält, berechnet als A1³⁺, im Verhältnis von 0,001 bis 0,01 mol% Al³⁺.

6. Strom/Spannungs-nicht-linearer Widerstand gemäß Anspruch 1, **dadurch gekennzeichnet, dass** der Sinterkörper bei der Bedingung hergestellt wurde, dass die Temperaturabfallgeschwindigkeit während der Feuerung auf nicht weniger als 50°C/Std. limitiert ist.

7. Strom/Spannungs-nicht-linearer Widerstand gemäß Anspruch 1, **dadurch gekennzeichnet, dass** der Sinterkörper Zirkon (Zr) als weiteren Unterbestandteil enthält, berechnet als ZrO₂ im Verhältnis von 0,1 bis 1.000 ppm ZrO₂.

## Revendications

1. Résistance non linéaire courant/tension constituée d'un corps fritté dans lequel l'oxyde de zinc (ZnO) est le constituant principal et le bismuth (Bi), l'antimoine (Sb), le cobalt (Co), le manganèse (Mn) et le nickel (Ni) sont des sous-constituants,
dans laquelle les sous-constituants, respectivement calculés dans la forme de Bi₂O₃, Sb₂O₃, Co₂O₃, MnO et NiO, sont contenus dans les proportions de :
0,3 à 1 % en mole de Bi₂O₃,
0,5 à 2,5 % en mole de Sb₂O₃,
0,3 à 1,5 % en mole de Co₂O₃,
0,2 à 2 % en mole de MnO,
0,5 à 3 % en mole de NiO ;
le rapport de la teneur en NiO à la teneur en MnO étant de 2,0 à 6,0 ; et
le rapport de la teneur en Sb₂O₃ à la teneur en MnO étant de 1,5 à 4,0,
**caractérisée en ce que** le corps fritté contient du fer (Fe) comme autre sous-constituant, calculé dans la forme de Fe₂O₃, dans la proportion de 0,1 à 1 000 ppm de Fe₂O₃.

2. Résistance non linéaire courant/tension selon la revendication 1, **caractérisée en ce que** le corps fritté contient au moins 95 % en mole de ZnO comme constituant principal.

3. Résistance non linéaire courant/tension selon la revendication 1, **caractérisée en ce que** le corps fritté contient du bore (B) comme autre sous-constituant, calculé dans la forme de B₂O₃, dans la proportion de 0,005 à 0,05 % en poids de B₂O₃.

4. Résistance non linéaire courant/tension selon la revendication 1, **caractérisée en ce que** le corps fritté contient de l'argent (Ag) comme autre sous-constituant, calculé dans la forme de Ag₂O, dans la proportion de 0,005 à 0,05 % on masse de Ag₂O.

5. Résistance non linéaire courant/tension selon la revendication 1, **caractérisée en ce que** le corps fritté contient de l'aluminium (Al) comme autre sous-constituant, calculé dans la forme de Al³⁺, dans la proportion de 0,001 à 0,01 % en mole de Al³⁺.

6. Résistance non linéaire courant/tension selon la revendication 1, **caractérisée en ce que** le corps fritté a été produit dans la condition que la vitesse de diminution de la température pendant la cuisson est limitée pour ne pas être inférieure à 50°C/h.

7. Résistance non linéaire courant/tension selon la revendication 1, **caractérisée en ce que** le corps fritté contient du zirconium (Zr) comme autre sous-constituant, calculé dans la forme de ZrO₂, dans la proportion de 0,1 à 1 000 ppm de ZrO₂.
